## Europäisches Patentamt
## European Patent Office
## Office européen des brevets

(11) Veröffentlichungsnummer: **0 083 696**
**B1**

(12)

# EUROPÄISCHE PATENTSCHRIFT

(45) Veröffentlichungstag der Patentschrift:
27.04.88

(51) Int. Cl.⁴: **B 60 J 1/17**, B 60 R 13/06

(21) Anmeldenummer: 82109602.1

(22) Anmeldetag: 18.10.82

(54) In der Höhe verstellbare Fensterscheibe, insbesondere für Kraftfahrzeuge.

(30) Priorität: 08.01.82 DE 3200322

(43) Veröffentlichungstag der Anmeldung:
20.07.83 Patentblatt 83/29

(45) Bekanntmachung des Hinweises auf die Patenterteilung:
27.04.88 Patentblatt 88/17

(84) Benannte Vertragsstaaten:
DE FR GB IT SE

(56) Entgegenhaltungen:
EP-A-0 040 588
DE-A-2 840 811
DE-A-2 924 309
DE-B-2 809 721

(73) Patentinhaber: Adam Opel Aktiengesellschaft,
Bahnhofsplatz 1 Postfach 1560, D-6090
Rüsselsheim (DE)

(72) Erfinder: Arnheim, Hans- Rudolf, Ing. grad.,
Heinrich- Heine- Strasse 50, D-6065 Nauheim (DE)
Erfinder: Warner, Hermann, Ulmenstrasse 13,
D-6097 Trebur 1 (DE)

(74) Vertreter: Elbert, Karl, Dipl.- Ing., Adam Opel
Aktiengesellschaft Bahnhofplatz 1 Postfach 17
10, D-6090 Rüsselsheim (DE)

**Beschreibung**

Die Erfindung bezieht sich auf eine in der Höhe verstellbare Fensterscheibe für ein Kraftfahrzeug, insbesondere für die Tür eines Kraftfahrzeuges, die bündig mit den angrenzenden Karosserieteilen verläuft und deren Führungsmittel sowie die Fensterdichtung und eine nachgiebige Führungsbahn auf der Innenseite der Fensterscheibe angeordnet sind.

Bei einer durch die DE-A-2 840 811 bekanntgewordenen Anordnung dieser Art, ist das Führungsmittel vom Rand der Fensterscheibe aus nach innen versetzt angeordnet. Am Rand der Fensterscheibe selbst liegt die Fensterdichtung an. Die Führungsmittel sind dabei von einzelnen Gleftstücken gebildet, die nahe dem oberen und unteren Ende der Scheibe an dieser angebracht sind. Wenn bei einer solchen Fensterscheibe diese ganz in die Tür hinein versenkt werden soll, so muß das obere Gleitstück durch die Schachtabdichtung sich nach unten bewegen. Die Schachtabdichtung kann daher nicht bis an die Fensterdichtung heranreichen, sondern es muß vielmehr ein Zwischenraum zwischen dem Ende der Schachtabdichtung und der Fensterdichtung freigehalten werden, durch den das Gleitstück sich nach unten in die Tür hinein bewegen kann. Durch diesen Zwischenraum können Geräusche aus der Tür in den Fahrgastraum gelangen.

Der Erfindung liegt die Aufgabe zugrunde, eine Scheibenführung zu schaffen, bei der kein Zwischenraum zwischen Schachtabdichtung und Fensterdichtung vorhanden ist, durch den Geräusche in der Tür sich in den Fahrgastraum fortpflanzen können. Ferner soll eine Führung der Scheibe am Fensterrahmen mit geringer Reibung erreicht werden, wobei diese durch Toleranzabweichungen sich nur wenig verändert.

Erfindungsgemäß wird dies dadurch erreicht,
daß das Führungsmittel mit einem Arm vom Rand der Fensterscheibe nach deren Mitte zu verläuft und zwischen dem Führungsmittel und der Fensterscheibe ein Teil des Fensterrahmens und die Führungsbahn angeordnet ist, gegen die das Führungsmittel durch die Vorspannung der Fensterdichtung anliegt, gegen die die Schachtabdichtung spaltfrei angrenzt.

Das Material für die Fensterdichtung und die Führungsbahn kann dabei so gewählt werden, daß eine gute Abdichtung und Führung und keine zu hohe deibung zwischen Führungsmittel und Führungsbahn erreicht wird.

In vorteilhafter Weise ist das Führungsmittel von einer Führungsschiene gebildet. Durch diese durchgehende Führungsschiene wird in vorteilhafter Weise erreicht, daß diese selbst bereits eine Art Dichtung, zumindest einen Staubschutz, bildet. Zwischen der Führungsschiene und der eigentlichen Fensterdichtung wird somit ein abgeschlossener Raum gebildet. Die Führungsschiene ist zweckmäßig unmittelbar am Rand der Fensterscheibe befestigt und bedeckt mittels eines Ansatzes die Kante der Fensterscheibe. Die Führungsschiene schützt somit den hand der Fensterscheibe gegen Beschädigung und bildet in gewissem Sinne teilweise eine Scheibenfassung.

Hinsichtlich Herstellung und Montage erwefst es sich als vorteilhaft, wenn die lippenförmige Fensterdichtung und die lippenförmige Führungsbahn von einem einzigen, am Fensterrahmen befestigten Strangprofil gebildet sind. Durch die lippenförmige Ausbildung von Fensterdichtung und Führungsbahn läßt sich insbesondere auch eine geringe Reibung erreichen. Bei getrennter Ausbildung von Fensterdichtung und Führungsbahn, könnte die Führungsbahn auch mit dem Führungsmittel fest verbunden sein und in einer Führungsschiene gleiten.

Die lippenförmige Fensterdichtung entspricht im seitlichen Bereich der Fensterscheibe im querschnitt der Fensterdichtung des oberen Bereiches, so daß an der Verbindungsstelle dieser beiden Abschnitte ein gleichmäßiger Übergang erreicht wird.

Die Erfindung wird anhand von Ausführungsbeispielen näher erläutert.

In der Zeichnung zeigen:
Fig. 1 eine Fahrzeugtür in Seitenansicht,
Fig. 2 einen Schnitt nach Linie II - II in Fig. 1,
Fig. 3 einen Schnitt nach Linie III - III in Fig. 1,
Fig. 4 eine weitere Ausbildung gemäß der Linie II - II und
Fig. 5 ebenfalls einen Schnitt nach Linie III - III in Fig. 1.

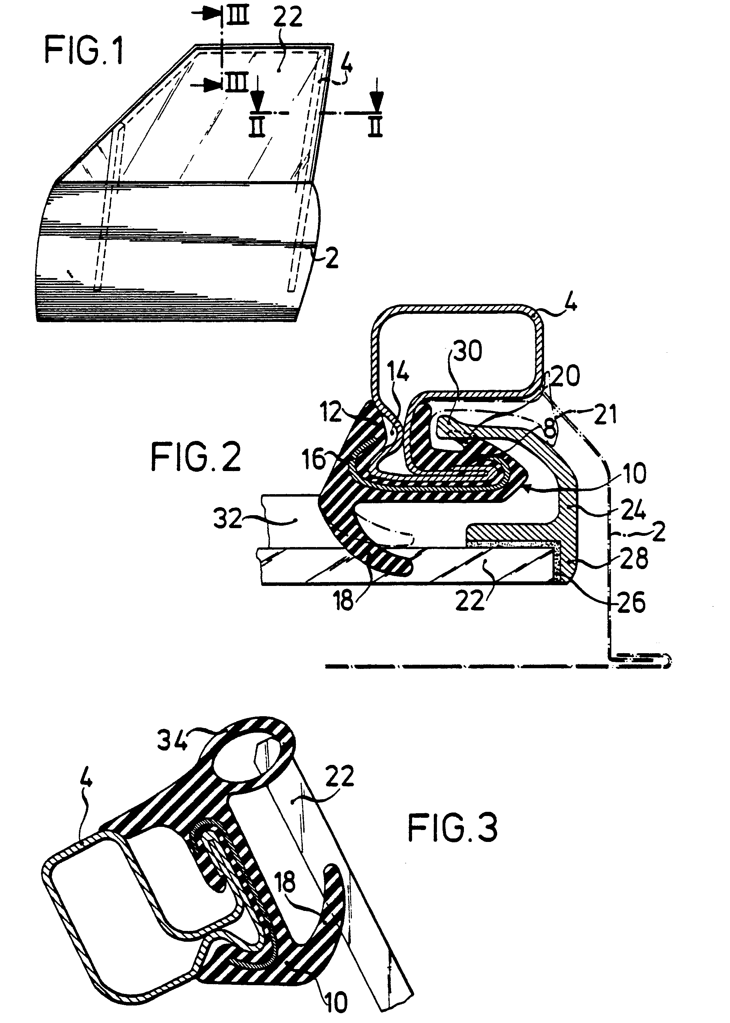

Die Fahrzeugtür 2 in Fig. 1 ist mit einem nach dem Fahrzeug innern zu liegenden Fensterrahmen 4 versehen, dessen seitliche Abschnitte sich zwischen Türinnen- und Türaußenblech hinein nach unten erstrecken. Am Fensterrahmen 4 ist die Fensterscheibe 22 geführt. Der Fensterrahmen 4 besteht aus einem gerollten Stahlprofil. Er hat beispielsweise den in Fig. 2 gezeigten Querschnitt, bzw. das gezeigte Profil, das einen Flansch 8 bildet. An diesem Flansch 8 ist das Strangprofil 10 befestigt, zu welcher Befestigung auch noch ein Schenkel 12 des Strangprofiles 10 dient, der in eine entsprechende Ausnehmung 14 am Fensterrahmen eingreift. Für die Befestigung des Strangprofiles 10 am Fensterrahmen 4 gibt es jedoch vielerlei Möglichkeiten. Das Strangprofil 10 ist mit einer metallischen Verstärkung 16 versehen. Im übrigen besteht das Strangprofil 10 aus einem Kunststoff oder Gummi bestimmter Härte. Das Strangprofil 10 bildet die lippenförmige Fensterdichtung 18 sowie die ebenfalls lippenförmige Führungsbahn 20. Zur Erfüllung der Funktion der Abdichtung und der Führung muß der Profilstrang 10 aus einem Material gewisser Härte und Reibungseigenschaften bestehen. An das Strangprofil 10 kann ferner eine in Fig. 2 in strichpunktierten Linien dargestellte Abdecklippe 21 angeformt sein.

Die Fensterdichtung 10 liegt gegen die Fensterscheibe 22 an. An deren Rand ist die Führungsschiene 24 mittels eines Klebemittels 26 befestigt. Die Führungsschiene weist einen Ansatz 28 auf, der sich an die Kante der Fensterscheibe 22 anlegt und somit diese gegen Beschädigungen schützt. Mit einem Arm 30 hintergreift die Führungsschiene 24 die Führungsbahn 20. Die lippenförmige Fensterdichtung 18 ist gegen die Fensterscheibe 22 und die lippenförmige Führungsbahn 20 gegen die Abbiegung 30 der Führungsschiene 24 vorgespannt. Die Fensterscheibe 22 ist somit in geringem Maße nachgiebig quer zu ihrem Verlauf am Fensterrahmen 4 geführt. An die Fensterdichtung 18 schließt sich unmittelbar, d.h. spaltfrei, die am unteren Ende der Fensteröffnung verlaufende Schachtabdichtung 32 an.

Fig. 3 zeigt einen Querschnitt durch den oberen Abschnitt des Dachrahmens 4. Das Strangprofil 10 bildet hier die lippenförmige Fensterdichtung 18. Die Führungsbahn 20 fällt hier weg. An deren Stelle ist eine Zusatzdichtung 34 vorgesehen, an die sich der obere Rand der Fensterscheibe 22 im geschlossenen Zustand anlegt. Das Strangprofil 10 ist hier in gleicher Weise wie in Fig. 2 am Fensterrahmen 4 befestigt. Im Bereich der Fensterdichtung 18 weist das Strangprofil 10 den gleichen Querschnitt wie in Fig. 2, also im senkrechten Abschnitt, auf. In den Eckbereichen liegt daher das Profil des senkrechten Abschnittes und das des waagerechten Abschnittes übergangslos aneinander an. Die Fensterdichtung 18 und die Schachtabdichtung 32 bilden einen geschlossenen Dichtungsrahmen, obgleich das Fallfenster, d.h. die Fensterscheibe 22, ganz absenkbar ist. Eine Unterbrechung der Dichtflächen an der Fensterscheibe 22 durch Befestigungsmittel findet also nicht statt.

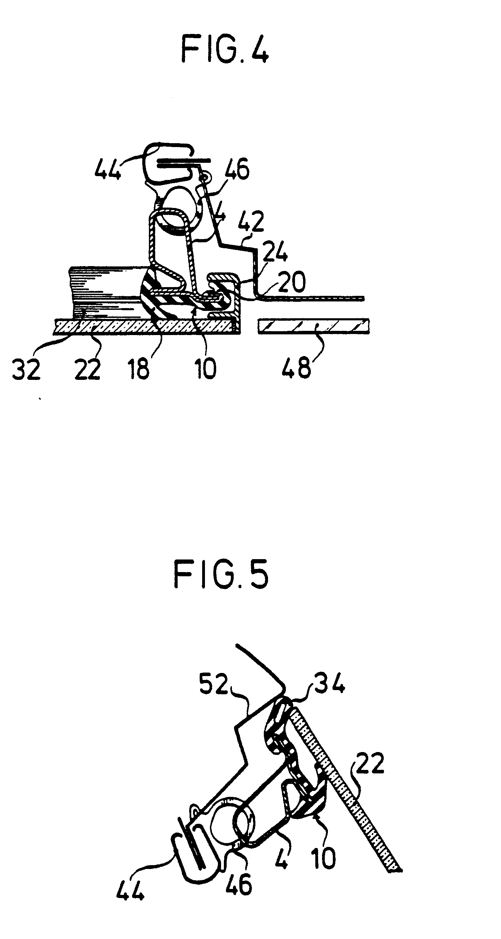

In Fig. 4 ist angrenzend an den Fensterrahmen 4 und die Führungsschiene 24 die Türsäule mit 42 angedeutet. An ihr befindet sich mittels der Flanschabdeckung 44 die Türdichtung 46, gegen die sich der Fensterrahmen 4 bei geschlossener Tür anlegt. Die Türsäule 42 ist außen von der Fensterscheibe 48 des hinteren Seitenfensters überdeckt.

Fig. 5 zeigt einen Schnitt nach Linie III - III in Fig. 1, d.h. einen Schnitt entsprechend der Fig. 3. Der Fensterrahmen 4 ist hier wie in Fig. 4 ausgebildet. Ebenso das Strangprofil 10, das lediglich die Zusatzdichtung 34 aufweist. Der Dachrand ist mit 52 bezeichnet. 46 stellt wieder die mittels der Flanschabdeckung 44 befestigte Türdichtung dar. Die Fensterdichtung 18 mit ihrem seitlichen und ihrem oberen Abschnitt sowie die Spaltabdichtung 32 bilden einen geschlossenen Dichtungsrahmen, der auf der ohne irgendwelchen Versatz ausgebildeten Fensterscheibe 22 anliegt.

## Patentansprüche

1. In der Höne verstellbare Fensterscheibe für ein Kraftfahrzeug, insbesondere für die Tür eines Kraftfahrzeuges, die bündig mit den angrenzenden Karosserieteilen verläuft und deren Führungsmittel sowie die Fensterdichtung und eine nachgiebige Führungsbahn auf der Innenseite der Fensterscheibe angeordnet sind, dadurch gekennzeichnet, daß das Führungsmittel (24) mit einem Arm (30) vom Rand der Fensterscheibe (22) nach deren Mitte zu verläuft und zwischen dem Führungsmittel (24) und der Fensterscheibe (22) ein Teil (8) des Fensterrahmens (4) und die Führungsbahn (20) angeordnet ist, gegen die das Fünrungsmittel (24) durch die Vorspannung der Fensterdichtung (18) anliegt, gegen die die Schachtabdichtung (32) spaltfrei angrenzt.

2. Fensterscheibe nach Anspruch 1, dadurch gekennzeichnet, daß das Führungsmittel (24) von einer Führungsschiene gebildet ist.

3. Fensterscheibe nach Anspruch 1 und 2, dadurch gekennzeichnet, daß die Führungsschiene (24) am Rand der Fensterscheibe (22) befestigt ist und mittels eines Ansatzes (28) die Kante der Fensterscheibe bedeckt.

4. Fensterscheibe nach Anspruch 1 bis 3, dadurch gekennzeichnet, daß die Fensterdichtung (18) und die Führungsbahn (20) im Querschnitt gesehen mit ihren Lippen in etwa entgegengesetzter Richtung verlaufen (Fig. 2).

5. Fensterscheibe nach Anspruch 1 bis 4, dadurch gekennzeichnet, daß die lippenförmige Fensterdichtung (18) und die lippenförmige Führungsbahn (20) von einem einzigen am Fensterrahmen (4) befestigten Strangprofil (10) gebildet sind.

6. Fenstertheibe nach Anspruch 1 bis 5, dadurch gekennzeichnet, daß die lippenförmige Fensterdichtung (18) im seitlichen Bereich der Fensterscheibe (22) im Querschnitt der Fensterdichtung (18) des oberen Bereiches entspricht und mit dieser einen gleichmäßigen Übergang bildet.

7. Fensterscheibe nach Anspruch 1 bis 5, dadurch gekennzeichnet, daß alle Dichtungen (18, 32) einen geschlossenen Dichtungsrahmen bilden und auf einer ohne Versatz ausgebildeten Glasfläche (Fenster 22) anliegen.

## Claims

Window pane of adjustable height for a motor vehicle, particular for the door of a motor vehicle, which lies flush with the adjoining bodywork components and whose guide means as well as the window seal and a flexible guide track are disposed on the inside of the window pane, characterised in that the guide means (24) extends by an arm (30) from the edge of the window pane (22) towards the centre thereof, and between the guide means (24) and the window pane (22) is disposed a portion (8) of the window frame (4) and the guide track (20) against which the guide means (24) abuts due to the initial tension of the window seal (18), which is adjoined by the shaft seal (32) without any gap.

2. Window pane according to claim 1, characterised in that the guide means (24) is formed by a guide rail.

3. Window pane according to claims 1 and 2, characterised in that the guide rail (24) is attached to the edge of the window pane (22) and covers the edge of the window pane by means of a shoulder (28).

4. Window pane according to claims 1 to 3, characterised in that the window seal (18) and the guide track (20) as seen in cross-section extend with their lips in approximately opposite directions (Fig. 2).

5. Window pane according to claims 1 to 4, characterised in that the lip-like window seal (18) and the lip-like guide track (20) are formed by a single extruded profile (10) attached to the window frame (4).

6. Window pane according to claims 1 to 5, characterised in that the lip-like window seal (18), in the lateral region of the window pane (22), corresponds in cross-section to the window seal (18) of the upper region and forms a uniform junction therewith.

7. Window pane according to claims 1 to 5, characterised in that all the seals (18, 32) form a closed sealing frame and abut against a glass surface (window 22) which is constructed without offset.

## Revendications

1. Vitre réglable en hauteur pour un véhicule automobile, en particulier pour la portière d'un véhicule automobile, qui s'étend au raz des parties adjacentes de la carosserie et dont le moyen de guidage ainsi que le joint de fenêtre et une glissière souple sont placés sur le côté intérieur de la vitre, caractérisée en ce que le moyen de guidage (24) présente un bras (30) s'étendant à partir du bord de la vitre (22) vers son milieu et en ce qu'entre le moyen de guidage (24) et la vitre (22) sont placées une partie (8) du cadre de fenêtre (4) et la glissière (20) contre laquelle le moyen de guidage (24) est appliqué par la prétension du joint de fenêtre (18) auquel le joint de puits de fenêtre (32) se raccorde sans interstice.

2. Vitre selon la revendication 1, caractérisée en ce que le moyen de guidage (24) est formé par un rail de guidage.

3. Vitre selon les revendications 1 et 2, caractérisée en ce que le rail de guidage (24) est fixé sur le bord de la vitre (22) et couvre le bord de la vitre à l'aide d'une nervure (28).

4. Vitre selon les revendication 1 et 3, caractérisée en ce que les lèvres du joint de fenêtre (18) et de la glissière (20) s'étendent, en coupe transversale, à peu près en sens opposés (fig. 2).

5. Vitre selon les revendications 1 à 4, caractérisée en ce que le joint de fenêtre (18) en forme de lèvre et la glissière (20) en forme de lèvre sont formés par un seul profilé extrudé (10) fixé sur le cadre de fenêtre (4).

6. Vitre selon les revendications 1 à 5, caractérisée en ce que le joint de fenêtre (18) en forme de lèvre, dans la zone latérale de la vitre (22), correspond en coupe transversale au joint de fenêtre (18) de la zone supérieure et se raccorde à ce dernier sans interruption.

7. Vitre selon les revendications 1 à 5, caractérisée en ce que tous les joints (18, 32) forment un cadre d'étanchéité fermé et sont appliqués sur une surface vitrée (vitre 22) réalisée sans déport.

FIG.1

FIG.2

FIG.3

1

# FIG. 4

# FIG. 5